# EUROPÄISCHE PATENTSCHRIFT

(11) **EP 1 331 535 B1**
(45) Veröffentlichungstag und Bekanntmachung des Hinweises auf die Patenterteilung: **12.10.2005**
(21) Anmeldenummer: 03001826.1
(22) Anmeldetag: 29.01.2003
(51) Int. Cl.: G05B 19/042

(54) **Feldgerät**
Field bus device
Dispositif de terrain

(30) Priorität: 29.01.2002 DE 10203555
(43) Veröffentlichungstag der Anmeldung: 30.07.2003
(73) Patentinhaber: ENDRESS + HAUSER WETZER GmbH + Co. KG, D-87484 Nesselwang (DE)
(72) Erfinder: Kellermann, Thomas, 87477 Moosbach (DE); Kalteis, Helmut, 87616 Marktoberdorf (DE)
(74) Vertreter: Andres, Angelika Maria

(56) Entgegenhaltungen:
- EP-A- 0 895 199
- EP-A- 1 049 050
- DE-A- 10 006 126
- DE-A- 19 914 765
- VAN DER BIJL W: "DIGITAL DATA COMMUNICATION, CONTROL AND MAINTENANCE" , JOURNAL A, SOFT VISION, BRUSSELS, BE, VOL. 34, NR. 1, PAGE(S) 19-23 XP000361877 ISSN: 0771-1107 * Seite 21, linke Spalte, Absatz 3 *

## Beschreibung

Die Erfindung betrifft ein Feldgerät gemäß dem Oberbegriff des Anspruchs 1.

In der Automatisierungs- und Prozesssteuertechnik werden häufig Feldgeräte eingesetzt, die eine Prozessvariable in einem Prozessablauf messen. Feldgeräte zur Durchfluss-, Füllstands-, Differenzdruck-, Temperaturbestimmung etc. sind allgemein bekannt. Sie dienen zur Erfassung der entsprechenden Prozessvariable Massen- oder Volumenfluss, Füllhöhe, Druck, Temperatur etc. Die Feldgeräte erzeugen jeweils Messsignale, die ein Maß für die erfasste Prozessvariable sind. Die Messsignale werden meist an eine Warte oder an ein Leitsystem weitergeleitet. In der Regel erfolgt die gesamte Prozesssteuerung von der Warte oder vom Leitsystem aus, wo die verschiedenen Messsignale unterschiedlicher Feldgeräte ausgewertet werden und aufgrund der Auswertung Steuersignale für weitere Feldgeräte (Aktoren z. B. Ventile) erzeugt werden, die den Prozessablauf steuern. Die Signalübertragung zwischen Feldgerät und Warte bzw. Leitsystem erfolgt z. B. über eine Stromschleife oder einen digitalen Datenbus entsprechend den bekannten Standards (Profibus, Foundation Fieldbus, CAN-Bus).

Aus den EP 1 049 050 ist ein Mikrosystem bekannt, das die Merkmale des Oberbegiffs zeigt.

Zu jedem Feldgerät gibt es eine Vielzahl von feldgerätespezifischen Informationen, wie z. B. Zertifikate, Bedienungsanleitung und technische Informationen. Diese Informationen werden in der Regel in Papierform mit dem Feldgerät ausgeliefert. Teilweise sind diese Informationen auch schon in Leitsystemanwendungen integriert. So kann man in der Warte die entsprechenden Informationen zu einem bestimmten Feldgerät einfach aufrufen und auf einem Bildschirm darstellen.

Häufig werden diese Informationen aber nicht in der Warte benötigt sondern beim Feldgerät selbst, z. B. bei einer Serviceinspektion.

Dies bedeutet aber, dass ein Servicetechniker alle benötigen Informationen in Papierform mit sich mitführen muss oder sie umständlich vom Leitsystem abrufen muss. Dies ist sehr aufwendig und führt zur ungewünschten Verzögerung beim Service.

Aufgabe der Erfindung ist es deshalb ein Feldgerät zu schaffen, das die oben genannten Nachteile nicht aufweist.

Gelöst wird diese Aufgabe durch das in Anspruch 1 angegebene Feldgerät.

Die wesentliche Idee der Erfindung besteht darin, alle benötigten Informationen zu einem speziellen Feldgerät in einem Speicher des Feldgeräts abzuspeichern.

Vorteilhafte Weiterentwicklung der Erfindung sind in den Unteransprüchen angegeben.

Nachfolgend ist die Erfindung anhand eines in der Zeichnung dargestellten Ausführungsbeispiels näher erläutert.

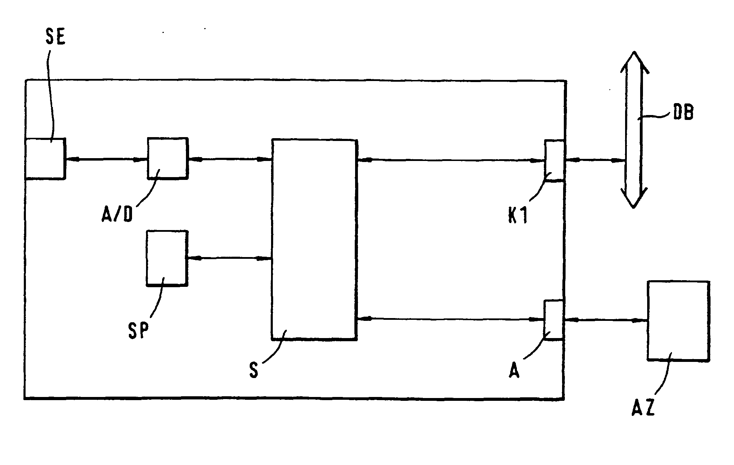

Es zeigen Figur 1 ein erfindungsgemäßes Feldgerät.

In Figur 1 ist ein an sich bekanntes Feldgerät F dargestellt. Das Feldgerät F weist einen Sensor SE auf, der eine Prozessvariable (z. B. Drucktemperatur oder Durchfluss) erfasst. Das analoge Messsignal wird einem A/D- Wandler A/D in ein digitales Messsignal umgewandelt und in einem Mikroprozessor S zugeführt. In einem nicht flüchtigen Speicher SP der mit dem Mikroprozessor S verbunden ist, ist u.a. ein Steuerprogramm mit verschiedenen Parameter (z. B. Kalibrierfaktoren) abgespeichert. Bei dem nicht flüchtigen Speicher SP kann es sich beispielsweise um ein Eprom, einem (E)Eprom, Flashspeicher oder einen Chip handeln. Weiterhin ist mit dem Mikroprozessor S eine Ein/Ausgabeeinheit E/A verbunden, die im wesentlichen zur Anzeige des Messwertes und zur manuellen Eingabe dient. Über eine Schnittstelle K1 kommuniziert der Mikroprozessor S mit einer nicht näher dargestellten Warte bzw. einem Prozessleitsystem. Die Kommunikation kann über einen Datenbus DB oder über einen seriellen Bus erfolgen. Die Kommunikation erfolgt nach den bekannten Standards (Hart, Profibus, Foundation, Fieldbus, CAN-Bus). Der Mikroprozessor S ist weiterhin mit einem Interface A, an das eine Anzeigeeinheit AZ Computer PC angeschlossen werden kann, verbunden.

Nachfolgend ist die Funktionsweise der Erfindung näher erläutert. Benötigt ein Servicetechniker vor Ort in unmittelbarer Nähe des Feldgerätes F Informationen über das Feldgerät, so kann er diese Information einfach abrufen, indem er eine Anzeigeeinheit AZ an das Interface A anschließt und die entsprechende Informationen aus dem Speicher SP abruft. Diese Informationen werden auf der Anzeigeeinheit AZ dargestellt. Somit hat der Servicetechniker vor Ort alle notwendigen Informationen zur Bedienung (z. B. Fehlerbehebung) zur Verfügung. Ein aufwendiges Mitführen von Dokumentationen in Papierform entfällt. Ist die entsprechende Information im Leitsystem abgespeichert, so entfällt ein aufwendiges Übertragen dieser Daten zum Einsatzort des entsprechenden Feldgerätes.

Bei dem Speicher SP kann es sich um einen Chip, einen Eprom, einen (E)Eprom oder einem Flashspeicher handeln.

Als Informationen können im Speicher SP Zertifikate, Bedienungsanleitungen, technische Informationen etc. abgespeichert werden.

Als Anzeigeeinheit sind Personal Computer PC, Drucker oder Handhelds denkbar.
Als Schnittstellen A können Seriell-, Infrarot- oder Funkschnittstellen eingesetzt werden.

Mit dem erfindungsgemäßen Feldgerät stehen alle relevanten Informationen in unmittelbarer Nähe der Feldgeräte zur Verfügung.

In einer Weiterentwicklung der Erfindung ist der Speicher SP nicht über eine Leitung mit dem Mikroprozessor S verbunden, sondern mittels einer Funkverbindung. Somit können Daten zwischen dem Mikroprozessor S und dem Speicher SP drahtlos übertragen werden.
Bei dieser Weiterentwicklung ist die Schnittstelle A direkt mit dem Speicher SP verbunden.
Das Auslesen des Speichers SP kann so z.B. auch drahtlos mit einem entsprechenden Handbediengerät (Handheld) erfolgen.
Der Speicher SP kann als Zwischenspeicher für verschiedene Informationen, z. Bsp. Parameter, Störprotokolle oder Softwareänderungen dienen. Einem Service-Techniker stehen damit diese Informationen in einfacher Weise direkt am entsprechenden Feldgerät zur Verfügung.
Der Zwischenspeicher kann z. Bsp. fest mit dem Gehäuse des Feldgerätes verbunden sein. Ist ein Elektroniktausch im Feldgerät notwendig, so können in diesem Zwischenspeicher SP die Parameter des Feldgerätes gesichert werden. Weiterhin kann der Speicher SP als elektronische Verplombung des
Feldgerätes dienen. Jede Manipulation des Feldgerätes kann durch die im Speicher SP abgespeicherten Daten erkannt werden. Stimmen diese nicht mit den verwendeten Parametern überein, so wird eine Fehlermeldung generiert.
Informationer die mehr Speicherplatz im Speicher SP benötigen als in diesem zur Verfügung steht, werden als entsprechende Links, die zu diesen Informationen führen, im Speicher SP abgespeichert. Besitzt das Handbediengerät eine Internetverbindung, so können die entsprechenden Informationen via Internetlink aufgerufen werden.

## Patentansprüche

1. Feldgerät für die Automatisierungs-/Prozesssteuertechnik, das einen Speicher (SP) aufweist, wobei der Speicher (SP) über eine zusätzlich zu einer Feldbusschnittstelle verfügbare lokale Schnittstelle (A) mit einer externen Anzeigeeinheit (AZ) verbindbar ist, **dadurch gekennzeichnet, dass** im Speicher (SP) ein Internetlink abgespeichert ist, über den feldgerätespezifische Informationen via Internet abrufbar sind und dass im Speicher (SP) feldgerätespezifische Informationen abgespeichert sind, die mit Hilfe der Anzeigeeinheit (AZ) darstellbar sind.

2. Feldgerät nach Anspruch 1, **dadurch gekennzeichnet, dass** der Speicher (SP) mit einem Mikroprozessor (S) verbunden ist, der ein Interface (A) aufweist, das mit der Anzeigeeinheit (AZ) verbindbar ist.

3. Feldgerät nach Anspruch 1, **dadurch gekennzeichnet, dass** der Speicher (SP) mit einem Mikroprozessor (S) und einem Interface (A), das mit der Anzeigeeinheit (AZ) verbindbar ist, drahtlos verbunden ist.

4. Feldgerät nach einem der vorhergehenden Ansprüche, **dadurch gekennzeichnet, dass** im Speicher (SP) eine Feldgeräte-Bedienungsanleitung abgespeichert ist.

5. Feldgerät nach einem der vorhergehenden Ansprüche, **dadurch gekennzeichnet, dass** im Speicher (SP) ein Feldgeräte-Zertifikat abgespeichert ist.

6. Feldgerät nach einem der vorhergehenden Ansprüche, **dadurch gekennzeichnet, dass** im Speicher (SP) technische Informationen zum Feldgerät abgespeichert sind.

7. Feldgerät nach einem der vorhergehenden Ansprüche, **dadurch gekennzeichnet, dass** das Interface (A) eine serielle Schnittstelle, eine Infrarotschnittstelle oder Funkschnittstelle ist.

8. Feldgerät nach einem der vorhergehenden Ansprüche, **dadurch gekennzeichnet, dass** die Anzeigeeinheit (AZ) ein PC, ein Handheld oder ein Drucker ist.

## Claims

1. A field bus device for automation / process-control technology, which comprises a memory **(SP),** wherein the memory **(SP)** is capable of being connected to an external display unit **(AZ)** by way of a local interface **(A)** which is available in addition to a field bus interface, **characterized in that** an Internet link, by way of which information specific to the field bus device is capable of being retrieved *via* the Internet, is stored in the memory **(SP),** and information specific to the field bus device, which is capable of being shown with the aid of the display unit **(AZ),** is stored in the memory **(SP).**

2. A field bus device according to Claim 1, **characterized in that** the memory **(SP)** is connected to a microprocessor **(S)** which has an interface **(A)** which is capable of being connected to the display unit **(AZ).**

3. A field bus device according to Claim 1, **characterized in that** the memory **(SP)** is connected without wires to a microprocessor **(S)** and an interface **(A)** which is capable of being connected to the display unit **(AZ).**

4. A field bus device according to one of the preceding Claims, **characterized in that** operating instructions for the field bus device are stored in the memory **(SP).**

5. A field bus device according to one of the preceding Claims, **characterized in that** a field bus device certificate is stored in the memory **(SP).**

6. A field bus device according to one of the preceding Claims, **characterized in that** technical information on the field bus device is stored in the memory **(SP).**

7. A field bus device according to one of the preceding Claims, **characterized in that** the interface **(A)** is a serial interface, an infrared interface or a radio interface.

8. A field bus device according to one of the preceding Claims, **characterized in that** the display unit **(AZ)** is a PC, a handheld device or a printer.

## Revendications

1. Dispositif de terrain pour la technique d'automatisation / la technique de commande de procédé présentant une mémoire (SP) ; la mémoire (SP) étant susceptible d'être reliée à une unité d'affichage (AZ) externe par l'intermédiaire d'une interface (A) local en plus d'une interface à bus de champ, **caractérisé en ce que** un lien Internet est stocké dans la mémoire (SP) par lequel lien des informations spécifiques au dispositif de terrain peuvent être extraites par Internet et **en ce que** des informations spécifiques au dispositif de terrain sont stockées dans la mémoire (SP) qui peuvent être représentées à l'aide de l'unité d'affichage (AZ).

2. Dispositif de terrain selon la revendication 1, **caractérisé en ce que** la mémoire (SP) est reliée avec un microprocesseur (S) qui présente une interface (A) susceptible d'être reliée avec l'unité d'affichage (AZ).

3. Dispositif de terrain selon la revendication 1, **caractérisé en ce que** la mémoire (SP) est reliée avec un microprocesseur (S) et une interface (A) qui peut être reliée sans fil avec l'unité d'affichage (AZ).

4. Dispositif de terrain selon une des revendications précédentes, **caractérisé en ce qu'**un mode d'emploi du dispositif de terrain est stocké dans la mémoire (SP).

5. Dispositif de terrain selon une des revendications précédentes, **caractérisé en ce qu'**un certificat pour le dispositif de terrain est stocké dans la mémoire (SP).

6. Dispositif de terrain selon une des revendications précédentes, **caractérisé en ce que** des informations techniques concernant le dispositif de terrain sont stockées dans la mémoire (SP).

7. Dispositif de terrain selon une des revendications précédentes, **caractérisé en ce que** l'interface (A) est une interface sérielle, une interface infrarouge ou une interface radio.

8. Dispositif de terrain selon une des revendications précédentes, **caractérisé en ce que** l'unité d'affichage (AZ) est un ordinateur, un dispositif à main ou une imprimante.
